# EUROPEAN PATENT SPECIFICATION

(11) **EP 2 121 335 B1**
(45) Date of publication and mention of the grant of the patent: **27.02.2013**
(21) Application number: 08709569.1
(22) Date of filing: 29.02.2008
(51) Int. Cl.: B41J 33/34, B41J 35/08

(54) **TAPE DRIVE**
BANDANTRIEB
DÉROULEUR DE BANDE

(30) Priority: 07.03.2007 GB 0704367; 13.03.2007 US 894513 P
(43) Date of publication of application: 25.11.2009
(73) Proprietor: Videojet Technologies (Nottingham) Limited, NG7 2QP (GB)
(72) Inventor: MCNESTRY, Martin, Derbyshire DE75 7HA (GB); BUXTON, Keith, Nottingham NG7 2QP (GB)
(74) Representative: Kenrick, Mark Lloyd
(86) International application number: PCT/GB2008/000696
(87) International publication number: WO 2008/107648

(56) References cited:
- WO-A-03/029013
- GB-A- 2 404 896
- JP-A- 61 169 265

## Description

The present invention relates to a tape drive. Such a tape drive may form part of a printing apparatus. In particular, such a tape drive may be used in transfer printers, that is printers which make use of carrier-supported inks.

In transfer printers, a tape which is normally referred to as a printer tape and carries ink on one side is presented within a printer such that a printhead can contact the other side of the tape to cause the ink to be transferred from the tape onto a target substrate of, for example, paper or a flexible film. Such printers are used in many applications. Industrial printing applications include thermal transfer label printers and thermal transfer coders which print directly on to a substrate such as packaging materials manufactured from flexible film or card.

Ink tape is normally delivered to the end user in the form of a roll wound onto a core. The end user pushes the core on to a tape spool, pulls a free end of the roll to release a length of tape, and then engages the end of the tape with a further spool. Generally the spools are mounted on a cassette, which can be readily mounted on a printing machine. The printing machine includes a transport means for driving the spools, so as to unwind tape from one spool and to take up tape on the other spool. The printing apparatus transports tape between the two spools along a predetermined path past the printing head.

Known printers of the above type rely upon a wide range of different approaches to the problem of how to drive the tape spools. Some rely upon stepper motors operating in a position control mode to pay out or take-up a predetermined quantity of tape. Other known printers rely on DC motors operating in a torque mode to provide tension in the tape to directly or indirectly drive the spools. Some known arrangements drive only the spool on to which tape is taken up (the take-up spool) and rely upon some form of "slipping clutch" arrangement on the spool from which tape is drawn (the supply spool) to provide a resistive drag force so as to ensure that the tape is maintained in tension during the printing and tape winding processes and to prevent tape overrun when the tape is brought to rest. It will be appreciated that maintaining adequate tension is an essential requirement for the proper functioning of the printer.

Alternative forms of known printer tape drives drive both the take-up spool and the supply spool. A supply spool motor may be arranged to apply a predetermined drag to the tape, by being driven in the reverse direction to the direction of tape transport. In such an arrangement (referred to herein as "pull-drag"), the motor connected to the take-up spool is arranged to apply a greater force to the tape than the motor connected to the supply spool such that the supply spool motor is overpowered and the supply spool thus rotates in the direction of tape transport. The supply spool drag motor keeps the tape tensioned in normal operation.

In a further alternative arrangement a supply spool motor may be driven in the direction of tape transport such that it contributes to driving the tape from the supply spool to the take-up spool. Such an arrangement is referred to herein as "push-pull". The take-up motor pulls the tape onto the take-up spool as tape is unwound by the supply spool motor such that tape tension is maintained. Such a push-pull arrangement is described in our earlier UK patent number GB 2369602, which discloses the use of a pair of stepper motors to drive the supply spool and the take-up spool. In GB 2369602 a controller is arranged to control the energisation of the motors such that the tape may be transported in both directions between spools of tape. The tension in the tape being transported between spools is monitored and motors are controlled to energise both motors to drive the spools of tape in the direction of tape transport.

As a printer gradually uses a roll of tape, the outer diameter of the supply spool decreases and the outer diameter of the take-up spool increases. In slipping clutch arrangements, which offer an essentially constant resistive torque, the tape tension will vary in proportion to the diameter of the spools. Given that it is desirable to use large supply spools so as to minimise the number of times that a tape roll has to be replenished, this is a serious problem particularly in high-speed machines where rapid tape transport is essential. For tape drives that use both a take-up motor and a supply spool motor, the variation in spool diameters can make it difficult to determine the correct drive signal to be supplied to each motor such that tape tension is maintained, and/or that tape is unwound or rewound at the correct rate.

Given these constraints, known printer designs offer a compromise in performance by way of limiting the rate of acceleration, the rate of deceleration, and the maximum speed capability of the tape transport system. Overall printer performance has, as a result, been compromised in some cases.

Known tape drive systems generally operate in one of two manners, that is either continuous printing or intermittent printing. In both modes of operation, the apparatus performs a regularly repeated series of printing cycles, each cycle including a printing phase during which ink is being transferred to a substrate, and a further non-printing phase during which the apparatus is prepared for the printing phase of the next cycle.

In continuous printing, during the printing phase a stationary printhead is brought into contact with a printer tape the other side of which is in contact with a substrate on to which an image is to be printed. The term "stationary" is used in the context of continuous printing to indicate that although the printhead will be moved into and out of contact with the tape, it will not move relative to the tape path in the direction in which tape is advanced along that path. Both the substrate and tape are transported past the printhead, generally but not necessarily at the same speed.

Generally only relatively small lengths of the substrate which is transported past the printhead are to be printed upon, and therefore to avoid gross wastage of tape it is necessary to reverse the direction of travel of the tape between printing operations. Thus in a typical printing process in which the substrate is travelling at a constant velocity, the printhead is extended into contact with the tape only when the printhead is adjacent to regions of the substrate to be printed. Immediately before extension of the printhead, the tape must be accelerated up to, for example, the speed of travel of the substrate. The tape speed must then be maintained at the constant speed of the substrate during the printing phase and, after the printing phase has been completed, the tape must be decelerated and then driven in the reverse direction so that the used region of the tape is on the upstream side of the printhead.

As the next region of the substrate to be printed approaches, the tape must then be accelerated back up to the normal printing speed and the tape must be positioned so that an unused portion of the tape close to the previously used region of the tape is located between the printhead and the substrate when the printhead is advanced to the printing position. Thus very rapid acceleration and deceleration of the tape in both directions is required, and the tape drive system must be capable of accurately locating the tape so as to avoid a printing operation being conducted when a previously used portion of the tape is interposed between the printhead and the substrate.

In intermittent printing, a substrate is advanced past a printhead in a stepwise manner such that during the printing phase of each cycle the substrate and generally but not necessarily the tape, are stationary. Relative movement between the substrate, tape and printhead are achieved by displacing the printhead relative to the substrate and tape. Between the printing phase of successive cycles, the substrate is advanced so as to present the next region to be printed beneath the printhead, and the tape is advanced so that an unused section of tape is located between the printhead and the substrate. Once again rapid and accurate transport of the tape is necessary to ensure that unused tape is always located between the substrate and printhead at a time that the printhead is advanced to conduct a printing operation.

GB 2,404,896 describes a tape drive in which a stepper motor drives a supply spool and a DC motor drives a take-up spool. However GB 2,404,896 does not teach in detail how the DC motor should be controlled

The requirements of high speed transfer printers in terms of tape acceleration, deceleration, speed and positional accuracy are such that many known drive mechanisms have difficulty delivering acceptable performance with a high degree of reliability. Similar constraints also apply in applications other than high-speed printers, for instance drives used in labelling machines, which are adapted to apply labels detached from label web. Tape drives in accordance with embodiments of the present invention are suitable for use in labelling machines in which labels are detached from a continuous label web which is transported between a supply spool and a take-up spool.

It is an object of embodiments of the present invention to obviate or mitigate one or more of the problems associated with the prior art, whether identified herein or elsewhere. It is a further object of embodiments of the present invention to provide a tape drive which can be used to deliver printer tape in a manner which is capable of meeting the requirements of high speed production lines, although the tape drive of the present invention may of course be used in any other application where similar high performance requirements are demanded.

According to the present invention, there is provided a tape drive comprising first and second motors, the first motor being a torque-controlled motor, two tape spool supports on which spools of tape may be mounted, each spool being drivable by a respective motor, and a controller operable to control the energisation of the motors such that tape may be transported in first and second directions between spools mounted on the spool supports, wherein when tape is moved in said first direction, said torque-controlled motor is energised in a first rotational direction, when tape is moved in said second direction, said torque-controlled motor is energised in said first rotational direction for a part of said movement and a second opposite rotational direction for another part of said movement.

By energising the torque-controlled motor in both first and second rotational directions, the torque-controlled motor can be controlled so as to ensure that it does not impart excessive torque to the spool which it drives. For example, where the torque-controlled motor is generally energised so as to oppose tape movement by being energised in the first direction, the torque-controlled motor may be energised so as to contribute to tape movement by being energised in a second direction for a predetermined time period.

When tape is moved in said first direction, said torque-controlled motor may be energised in said second rotational direction for a part of said movement.

It is preferred that each spool support is coupled to a respective motor by means of a drive coupling providing at least one fixed transmission ratio. Preferably, the ratio of angular velocities of each motor and its respective spool support is fixed. Such an arrangement requires that control of a motor to cause a desired linear tape movement from or to a respective spool takes into account the circumference of that spool.

The drive coupling may comprise a drive belt. Alternatively, as each spool support has a respective first axis of rotation and each motor has a shaft with a respective second axis of rotation, the respective first and second axes may be coaxial. Respective drive couplings may interconnect a respective spool shaft to a respective motor shaft.

The second motor may be a position-controlled motor, for example a stepper motor.

The controller may be operable to move said tape in said first direction and then to move said tape in said second direction. When tape is moved in said first direction, said torque-controlled motor may be arranged to drive a spool taking up tape, and when tape is moved in said second direction, said torque-controller motor may be arranged to drive a spool supplying tape. When the direction of tape movement is changed, said first motor may be energised in said second rotational direction for a first time period and subsequently energised in said first rotational direction.

The torque-controlled motor may be energised in the first direction by applying a current in a first current direction and energised in the second opposite direction by applying a current in a second opposite current direction.

At least one of the first and second motors may be switchable to operate either as a torque-controlled motor or as a position-controlled motors. The controller may be configured to set tension in the tape by controlling the torque-controlled motor. The controller may be operative to monitor tension in a tape being transported between a supply spool and a take-up spool and to control at least one of the motors to maintain the monitored tension between predetermined limits. The controller may be configured to energise the torque-controlled motor by providing a current at least partially based upon a diameter of at least one of the spools.

A tape drive in accordance with certain embodiments of the present invention relies upon both the motors that drive the two tape spools to drive the tape during tape transport. Thus the two motors operate in push-pull mode. This makes it possible to achieve very high rates of acceleration and deceleration. Tension in the tape being transported is determined by control of the drive motors and therefore is not dependent upon any components that have to contact the tape between the take-up and supply spools. Thus a very simple overall mechanical assembly can be achieved. Given that both motors contribute to tape transport, relatively small and therefore inexpensive and compact motors can be used.

A tape drive in accordance with certain other embodiments of the present invention operates in a pull-drag mode for which the motor attached to the spool currently taking in tape drives the spool in the direction of tape transport, whereas the other spool is driven in a reverse direction in order to tension the tape. In accordance with yet other embodiments of the present invention the tape drive motors may be arranged to operate in a push-pull mode for at least part of a printing cycle and a pull-drag mode for at least another part of the printing cycle.

The actual rotational direction of each spool will depend on the sense in which the tape is wound on each spool. If both spools are wound in the same sense then both spools will rotate in the same rotational direction to transport the tape. If the spools are wound in the opposite sense to one another, then the spools will rotate in opposite rotational directions to transport the tape. In any configuration, both spools rotate in the direction of tape transport. However, according to the operating mode of the supply spool motor, the direction in which it is driven may also be in the same direction as the supply spool (when the motor is assisting in driving the tape, by pushing the tape off the spool) or the supply spool motor may be driven in the opposite direction to that of the supply spool (when the motor is providing drag to the tape in order to tension the tape).

The tape drive may be incorporated in a transfer printer for transferring ink from a printer tape to a substrate, which is transported along a predetermined path adjacent to the printer. The tape drive may act as a printer tape drive mechanism for transporting ink ribbon between first and second tape spools, and the printer further comprising a printhead arranged to contact one side of the ribbon to press an opposite side of the ribbon into contact with a substrate on the predetermined path. There may also be provided a printhead drive mechanism for transporting the printhead along a track extending generally parallel to the predetermined substrate transport path (when the printer is operating in an intermittent printing mode) and for displacing the printhead into and out of contact with the tape. A controller may control the printer ink ribbon and printhead drive mechanisms, and the controller may be selectively programmable either to cause the ink ribbon to be transported relative to the predetermined substrate transport path with the printhead stationary and displaced into contact with the ink ribbon during printing, or to cause the printhead to be transported relative to the ink ribbon and the predetermined substrate transport path and to be displaced into contact with the ink ribbon during printing.

The drive mechanism may be bi-directional such that tape may be transported from a first spool to a second spool and from the second spool to the first. Typically, unused tape is provided in a roll of tape mounted on the supply spool. Used tape is taken up on a roll mounted on the take-up spool. However, as described above, in order to prevent gross ribbon wastage, after a printing operation the tape can be reversed such that unused portions of the tape may be used before being wound onto the take-up spool.

Embodiments of the present invention will now be described, by way of example, with reference to the accompanying drawings, in which:
Figure 1 is a schematic illustration of a printer tape drive system in accordance with an embodiment of the present invention;
Figure 2A is a graph showing how a direction of tape transport changes over time in the tape drive of Figure 1;
Figure 2B is a graph showing how a direction in which a motor is driven in the tape drive of Figure 1 changes over time; and
Figure 2C is a graph showing how current provided to the motor varies over time.

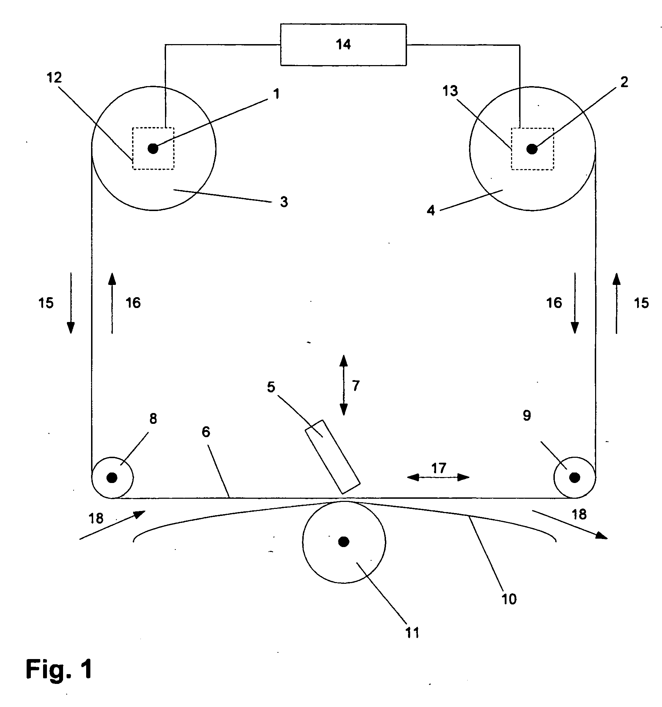

Referring to Figure 1, this schematically illustrates a tape drive suitable for use in a thermal transfer printer in accordance with the present invention. First and second shafts 1, 2 support a supply spool 3 and a take-up spool 4 respectively. The supply spool 3 is initially wound with a roll of unused tape, and the take-up spool 4 initially does not carry any tape. As tape is used within a printing operation, used portions of the tape are transported from the supply spool 3 to the take-up spool 4. A displaceable printhead 5 is provided, displaceable relative to tape 6 in at least a first direction indicated by arrow 7. Tape 6 extends from the supply spool 3 around rollers 8, 9 to the take-up spool 4. The path followed by the tape 6 between the rollers 8 and 9 passes in front of the printhead 5. A substrate 10 upon which print is to be deposited is brought into contact with the tape 6 between rollers 8 and 9, the tape 6 being interposed between the printhead 5 and the substrate 10. The substrate 10 may be brought into contact with the tape 6 against a platen roller 11.

The supply shaft 1 is driven by a supply motor 12 and the take-up shaft 2 is driven by a take-up motor 13. The supply and take-up motors 12, 13 are illustrated in dashed outline, indicating that they are positioned behind the supply and take-up spools 3, 4. It will however be appreciated that in alternative embodiments of the invention, the spools are not directly driven by the motors. Instead the motor shafts may be operably connected to the respective spools by a belt drive or other similar drive mechanism. In either case, it can be seen that there is a fixed transmission ratio between a motor and its respective spool support.

A controller 14 controls the operation of motors 12, 13 as described in greater detail below. The supply and take-up motors 12, 13 are capable of driving the tape 6 in both directions. Tape movement may be defined as being in the print direction if the tape is moving from the supply spool 3 to the take-up spool 4, as indicated by arrows 15. When tape is moving from the take-up spool 4 to the supply spool 3, the tape may be considered to be moving in the tape reverse direction, as indicated by arrows 16.

When the printer is operating in continuous mode the printhead 5 will be moved into contact with the tape 6 when the tape 6 is moving in the print direction 15. Ink is transferred from the tape 6 to the substrate 10 by the action of the printhead 5. Tape movement may be reversed such that unused portions of the tape 6 are positioned adjacent to the printhead 5 before a subsequent printing operation is commenced.

In the configuration illustrated in Figure 1, the spools 3, 4 are wound in the same sense as one another and thus rotate in the same rotational direction to transport the tape. Alternatively, the spools 3, 4 may be wound in the opposite sense to one another, and thus must rotate in opposite directions to transport the tape.

As described above, the printer schematically illustrated in Figure 1 can be used for both continuous and intermittent printing applications. The controller 14 is selectively programmable to select either continues or intermittent operation. In continuous applications, the substrate 10 will be moving continuously. During a printing cycle, the printhead 5 will be stationary but the tape will move so as to present fresh tape to the printhead 5 as the cycle progresses. In contrast, in intermittent applications, the substrate 10 is stationary during each printing cycle, the necessary relative movement between the substrate 10 and the printhead 5 being achieved by moving the printhead 5 parallel to the tape 6 and substrate 10 in the direction of arrow 17 during the printing cycle. In both applications, it is necessary to be able to rapidly advance and return the tape 6 between printing cycles so as to present fresh tape to the printhead and to minimise tape wastage. Given the speed at which printing machines operate, and that fresh tape 6 should be present between the printhead 5 and substrate 10 during every printing cycle, it is necessary to be able to accelerate the tape 6 in both directions at a high rate and to accurately position the tape relative to the printhead. In the arrangement shown in Figure 1 it is assumed that the substrate 10 will move only to the right as indicated by arrows 18. However, the apparatus can be readily adapted to print on a substrate travelling to the left (that is, in the opposite direction) in Figure 1.

In accordance with an embodiments of the present invention, the supply motor 12 is a position-controlled motor. The take-up motor 13 is a torque-controlled motor.

A torque-controlled motor is a motor that is controlled by a demanded output torque. An example of a torque-controlled motor is a DC motor Alternatively, coupling a stepper motor with an encoder and using the encoder output signal to generate a commutation signal that in turn drives the motor can provide a torque-controlled stepper motor. Varying the current that may be drawn by the motor can vary the torque provided by a torque-controlled motor of either sort.

A position-controlled motor comprises a motor controlled by a demanded output rotary position. That is, the output position may be varied on demand, or the output rotational velocity may be varied by control of the speed at which the demanded output rotary position changes.

An example of a position-controlled motor is a stepper motor. A stepper motor is an open loop position-controlled motor, that is, it is supplied with an input signal relating to a demanded rotational position or rotational velocity, the stepper motor being driven to achieve the demanded position or velocity. A stepper motor may also be provided with an encoder providing a feedback signal indicative of the actual output position or velocity. The feedback signal may be used to generate an error signal by comparison with the demanded output rotary position, the error signal being used to drive the motor to minimise the error. A stepper motor provided with an encoder in this manner comprises a closed loop form of position-controlled motor.

An alternative form of closed loop position-controlled motor comprises a DC motor provided with an encoder. The output from the encoder provides a feedback signal from which an error signal can be generated when the feedback signal is compared to a demanded output rotary position, the error signal being used to drive the motor to minimise the error.

In the present context the term "DC motor" is to be interpreted broadly as including any form of motor that can be driven to provide an output torque, such as a brushless DC motor, a brushed DC motor, an induction motor or an AC motor. A brushless DC motor comprises any form of electronically commutated motor with integral commutation sensor. Similarly, the term stepper motor is to be interpreted broadly as including any form of motor that can be driven by a drive signal indicating a required change of rotary position.

An encoder is any form of angular position sensing device, such as an optical encoder, magnetic encoder, resolver, capacitive encoder or any other form of position sensing device. An encoder may be connected to an output shaft of a motor and used to provide a feedback signal indicating the angular position or motion of the motor output shaft.

As indicated above, in a first embodiment of the present invention the take up motor 13 is a torque-controlled motor while the supply motor 12 is a position-controlled motor.

When the tape is travelling in the print direction 15 from the supply spool 3 to the take-up spool 4 the tape drive operates in a push-pull mode. That is, take-up motor 13 is controlled to "pull" the tape and therefore to set the tension in the tape by appropriate control of the current supplied to the take-up motor 13. The position-controlled supply motor 12 is driven to assist in transporting the tape, by being driven in the direction of tape transport. Tension in the tape is set by the torque-controlled takeup motor 13.

When tape is travelling in a tape reverse direction 16 from the take-up spool 4 to the supply spool 3 the tape drive operates in a pull-drag mode. That is, the torque-controlled take-up motor 13 provides a dragging force acting on the tape in order to keep the tape tensioned. The torque-controlled take-up motor 13 is driven in the opposite direction to the direction of tape transport, however the force applied to the tape is chosen such that the position-controlled supply motor 12 is able to overpower the torque-controlled take-up motor 13 such that the take-up spool 4 (which is now supplying tape) rotates in the direction of tape transport. Tension in the tape can be controlled by controlling the current supplied to the torque-controlled take-up motor 13 which is energised to resist rotation.

As described above, the controller 14 is configured to control the motors to move tape in the print direction 15 to enable printing to be carried out. The controller is then configured to move tape in the tape reverse direction 16 in order to reclaim tape. It can be seen that the take-up motor 13 is energised in the same rotational direction regardless of the direction of tape movement, given that the tape drive operates in a push-pull mode in one direction and a pull-drag mode in the other direction.

When the tape drive changes from moving tape in the print direction 15 to moving tape in the tape reverse direction 16, the resistive torque provided by the torque-controlled take-up motor 13 which is energised so as to resist tape movement may be excessive, thereby causing the position-controlled supply motor 12 (now taking up tape) to stall. In order to avoid this, the torque-controlled take-up motor 13 is energised in an opposite rotational direction for a short time after the direction of tape movement is changed. This ensures that the torque-controlled take-up motor does not provide excessive resistive torque.

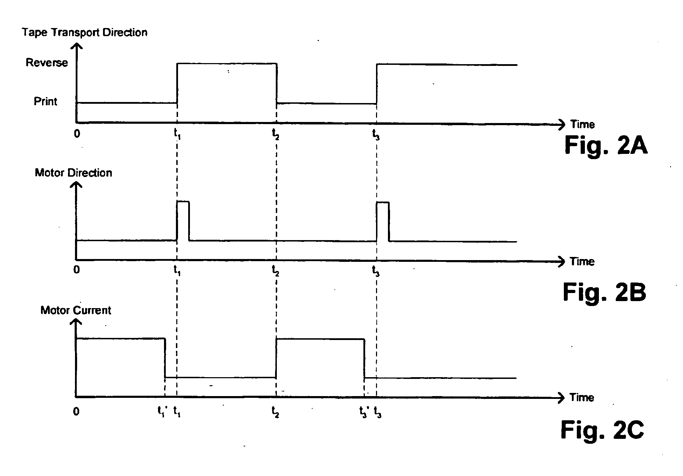

Figure 2A is a graph showing how the tape transport direction changes over time. It can be seen that from time 0 to time t₁ the tape is transported in the print direction 15. From time t₁ to time t₂ tape is transported in the tape reverse direction 16. From time t₂ to time t₃ tape is again transported in the print direction 15. From time t₃ the tape is again transported in the tape reverse direction 16.

Figure 2B is a graph showing the direction in which the torque-controlled take-up motor 13 is driven to cause tape transport as illustrated in Figure 2A. It can be seen that in general terms, the torque-controlled take-up motor is driven in a single direction. However, at times t₁ and t₃, when the tape transport direction changes from being in the print direction 15 to being in the tape reverse direction 16, the motor is driven in an opposite direction for a short period of time. This avoids the torque-controlled take-up motor 13 (which is now supplying tape) from exerting excessive tension on the tape, which may cause the position-controlled supply motor 12 to stall.

The drive signal controlling the torque controlled motor is optimised to apply an appropriate torque to the associated spool such that the tape is correctly tensioned at all times. That is, the current provided by the torque controlled motor is varied as a spool of tape is driven. This includes when the motor is accelerating, decelerating and operating at constant speed. This avoids excessive drag and keeps ribbon tension as constant as possible. Figure 2C is a graph showing how the current provided to the torque-controlled take-up motor 13 is varied. It can be seen that a greater current is generally provided when tape is transported in the print direction 15 (between times 0 and t₁, and between times t₂ and t₃) than when tape is transported in the tape reverse direction 16 (between times t₁ and t₂ and after time t₃). This again ensures that when the tape is transported in the tape reverse direction 16, excessive tension is not exerted on the tape.

However it can also be seen that between times t₁' and t₁ and between times t₃' and t₃, although the tape is transported in the print direction 15, the torque-controlled take-up motor 13 is provided with a lower current. This is so as to allow the tape to decelerate before the changes of direction which take place at times t₁ and t₃.

It will be appreciated that the print direction and rewind direction discussed above can be interchanged, such that the tape drive operates in a pull-drag mode when tape is moved in the print direction and a push-pull mode when tape is moved in the tape reverse direction 16.

In some embodiments of the invention the supply and the take-up motors 12, 13 may be such that each motor can act as either a position-controlled motor or a torque-controlled motor. Such motors are referred to herein as dual control mode motors. A suitable motor for this purpose is a DC motor provided with an output position encoder. When operating in a position-controlled mode, the encoder output position signal is used as a feedback signal. When operating in a torque-controlled mode, the encoder output position signal is not used.

An alternative suitable dual control mode motor is an open loop position control motor (such as a stepper motor) provided with an output position encoder. When operating in a position-controlled mode either the encoder signal is not used or the encoder signal is used to provide a closed loop position-controlled stepper motor. When operating in a torque-controlled mode the encoder output signal is used to provide the commutation drive signal to the open loop position controlled motor.

By providing both spools with dual control mode motors the tape drive may be operated in push-pull mode in both directions (that is, the print direction and the tape reverse direction). Alternatively, the tape drive may be operated in pull-drag mode in both directions. This advantageously means that the drive signals controlling the motors can be the same when the tape is being transported in both directions (the only difference being the motor to which each drive signal is provided). For simplicity it may be that the same type of motor is used to drive both the supply spool and the take-up spool, however this need not be the case.

For a pair of motors within a tape drive, the drive signal supplied to the motors is varied as the diameter of the supply spool and the take-up spool vary and as the required tape tension varies. Determining the appropriate motor drive signal requires that the spool diameters are determined in order that the demanded motor torque or the demanded motor position for the printing operation can be adjusted accordingly.

One known method of monitoring the diameter of a spool of tape is based upon optical sensing comprising at least one emitter and detector pair. The emitter and detector pair is arranged such that as the diameter of the spool changes, the spool blocks that signal from the emitter to the detector, which may be detected. Such an optical spool diameter monitoring technique is disclosed in GB 2369602.

An alternative method for determining tape spool diameter is disclosed in GB 2298821. Here, tape is passed around an idler roller of known diameter. The idler roller is provided with an anti-slip coating to prevent slippage occurring between the tape and the idler roller when the tape is moved. The outer diameter of the idler roller is known. Rotation of the idler roller is monitored. This is achieved by providing the idler roller with a magnetic disc having a north and south pole. Rotation of the idler roller can then be detected by an appropriate magnetic sensor. By detecting rotation of the idler roller of known diameter and knowing a number of steps through which a stepper motor has turned the diameter of a spool of tape associated with the stepper motor can be determined.

As noted above, tape drives in accordance with embodiments of the present invention may be used in thermal transfer printers of the type described above. Tape drives in accordance with embodiments of the present invention may be advantageously used in a thermal transfer over printer, such as may be used within the packaging industry, for instance for printing further information such as dates and bar codes over the top of pre-printed packaging (such as food bags).

Additionally, tape drives in accordance with embodiments of the present invention may be used in other applications, and provide similar advantages to those evident in thermal transfer printers, for instance fast and accurate tape acceleration, deceleration, speed and positional accuracy.

An alternative application where such tape drives may be applied is in labelling machines, which are adapted to apply labels detached from a continuous tape (alternatively referred to as a label web). Tape drives in accordance with embodiments of the present invention are suitable for use in labelling machines in which a label carrying web is mounted on a supply. Labels are removed from the web, and the web is driven onto a take-up spool.

In general, tape drives in accordance with embodiments of the present invention may be used in any application where there is a requirement to transport any form of tape, web or other continuous material from a first spool to a second spool.

Further modifications and applications of the present invention will be readily apparent to the appropriately skilled person from the teaching herein, without departing from the scope of the appended claims.

## Claims

1. A tape drive comprising first and second motors (12, 13), the first motor being a torque-controlled motor, two tape spool supports (1,2) on which spools (3,4) of tape may be mounted, each spool being drivable by a respective motor, and a controller (14) operable to control the energisation of the motors such that tape may be transported in first and second directions (15, 16) between spools mounted on the spool supports, wherein:
each spool support is coupled to a respective motor by means of a drive coupling providing at least one fixed transmission ratio; and **characterised in that**
when tape is moved in said first direction, said torque-controlled motor is energised in a first rotational direction, when tape is moved in said second direction, said torque-controlled motor is energised in said first rotational direction for a part of said movement and a second opposite rotational direction for another part of said movement.

2. A tape drive according to claim 1, wherein when tape is moved in said first direction, said torque-controlled motor is energised in said second rotational direction for a part of said movement.

3. A tape drive according to claims 1 or 2, wherein the second motor is a stepper motor.

4. A tape drive according to any preceding claim, wherein said controller is operable to move said tape in said first direction and then to move said tape in said second direction.

5. A tape drive according to claim 4, wherein when tape is moved in said first direction, said torque-controlled motor is arranged to drive a spool taking up tape, and when tape is moved in said second direction, said torque-controller motor is arranged to drive a spool supplying tape.

6. A tape drive according to claim 4 or 5, wherein when the direction of tape movement is changed, said first motor is energised in said second rotational direction for a first time period and subsequently energised in said first rotational direction.

7. A tape drive according to any preceding claim, wherein said torque-controlled motor is energised in the first direction by applying a current in a first current direction and energised in the second opposite direction by applying a current in a second opposite current direction.

8. A tape drive according to any preceding claim, wherein at least one of the first and second motors is controllable to operate either as a torque-controlled motor or as a position-controlled motors.

9. A tape drive according to any preceding claim, wherein the controller is configured to set tension in the tape by controlling the torque-controlled motor.

10. A tape drive according to any preceding claim, wherein the controller is configured to energise the torque-controlled motor by providing a current at least partially based upon a diameter of at least one of the spools.

11. A tape drive according to any one of claims 1 to 10, wherein each spool support has a respective first axis of rotation, each motor has a shaft with a respective second axis of rotation, and the respective first and second axes are co axial.

12. A tape drive according to any preceding claim incorporated in a thermal transfer printer.

13. A tape drive according to claim 12 wherein the printer is configured to transfer ink from a printer ribbon to a substrate which is transported along a predetermined path adjacent to the printer, the tape drive acting as a printer ribbon drive mechanism for transporting ribbon between first and second ribbon spools, and the printer further comprising a printhead arranged to contact one side of the ribbon to press an opposite side of the ribbon into contact with a substrate on the predetermined path.

14. A tape drive according to any one of claims 12 or 13, wherein the printer is a thermal transfer over printer.

15. A method for controlling a tape drive comprising first and second motors (12, 13), the first motor being a torque-controlled motor, two tape spool supports (1, 2) on which spools of tape (3, 4) may be mounted, each spool being drivable by a respective motor, and a controller (14) controlling the energisation of the motors such that tape may be transported in first and second directions (15, 16) between spools mounted on the spool supports, wherein each spool support is coupled to a respective motor by means of a drive coupling providing at least one fixed transmission ratio, and **characterized in that** when tape is moved in said first direction, said torque-controlled motor is energised in a first rotational direction, when tape is moved in said second direction, said torque-controlled motor is energised in said first rotational direction for a part of said movement and a second opposite rotational direction for another part of said movement.

## Patentansprüche

1. Bandantrieb, der aufweist: einen ersten und zweiten Motor (12, 13), wobei der erste Motor ein drehmomentgesteuerter Motor ist; zwei Bandspulenhalterungen (1, 2), auf die die Bandspulen (3, 4) montiert werden können, wobei eine jede Spule durch einen jeweiligen Motor angetrieben werden kann; und einen Regler (14), der funktionsfähig ist, um die Einschaltung der Motoren zu steuern, so dass das Band in einer ersten und zweiten Richtung (15, 16) zwischen den auf den Spulenhalterungen montierten Spulen transportiert werden kann, wobei:
eine jede Spulenhalterung mit einem jeweiligen Motor mittels einer Antriebskupplung verbunden ist, die mindestens ein konstantes Übersetzungsverhältnis liefert; und **dadurch gekennzeichnet, dass**,
wenn das Band in der ersten Richtung bewegt wird, der drehmomentgesteuerte Motor in einer ersten Rotationsrichtung eingeschaltet wird, wenn das Band in der zweiten Richtung bewegt wird, der drehmomentgesteuerte Motor in der ersten Rotationsrichtung über einen Abschnitt der Bewegung und einer zweiten entgegengesetzten Rotationsrichtung über einen anderen Abschnitt der Bewegung eingeschaltet wird.

2. Bandantrieb nach Anspruch 1, bei dem, wenn das Band in der ersten Richtung bewegt wird, der drehmomentgesteuerte Motor in der zweiten Rotationsrichtung über einen Abschnitt der Bewegung eingeschaltet wird.

3. Bandantrieb nach Anspruch 1 oder 2, bei dem der zweite Motor ein Schrittmotor ist.

4. Bandantrieb nach einem der vorhergehenden Ansprüche, bei dem der Regler funktionsfähig ist, um das Band in der ersten Richtung zu bewegen und danach das Band in der zweiten Richtung zu bewegen.

5. Bandantrieb nach Anspruch 4, bei dem, wenn das Band in der ersten Richtung bewegt wird, der drehmomentgesteuerte Motor angeordnet ist, um eine Spule anzutreiben, die das Band aufnimmt, und, wenn das Band in der zweiten Richtung bewegt wird, der drehmomentgesteuerte Motor angeordnet ist, um eine Spule anzutreiben, die das Band liefert.

6. Bandantrieb nach Anspruch 4 oder 5, bei dem, wenn die Richtung der Bandbewegung verändert wird, der erste Motor in der zweiten Rotationsrichtung über eine erste Zeitdauer und anschließend in der ersten Rotationsrichtung eingeschaltet wird.

7. Bandantrieb nach einem der vorhergehenden Ansprüche, bei dem der drehmomentgesteuerte Motor in der ersten Richtung durch Anlegen eines Stromes in einer ersten Stromrichtung und in der zweiten entgegengesetzten Richtung durch Anlegen eines Stromes in einer zweiten entgegengesetzten Stromrichtung eingeschaltet wird.

8. Bandantrieb nach einem der vorhergehenden Ansprüche, bei dem mindestens einer von erstem und zweitem Motor regulierbar ist, um entweder als ein drehmomentgesteuerter Motor oder als ein positionsgesteuerter Motor zu funktionieren.

9. Bandantrieb nach einem der vorhergehenden Ansprüche, bei dem der Regler ausgebildet ist, um eine Zugspannung im Band durch Steuern des drehmomentgesteuerten Motors einzustellen.

10. Bandantrieb nach einem der vorhergehenden Ansprüche, bei dem der Regler ausgebildet ist, um den drehmomentgesteuerten Motor durch Liefern eines Stromes einzuschalten, mindestens teilweise auf einem Durchmesser von mindestens einer der Spulen basierend.

11. Bandantrieb nach einem der Ansprüche 1 bis 10, bei dem eine jede Spulenhalterung eine jeweilige erste Rotationsachse aufweist, wobei ein jeder Motor eine Welle mit einer jeweiligen zweiten Rotationsachse aufweist und die jeweilige erste und zweite Achse koaxial sind.

12. Bandantrieb nach einem der vorhergehenden Ansprüche, eingebaut in einem Thermotransferdrucker.

13. Bandantrieb nach Anspruch 12, bei dem der Drucker ausgebildet ist, um Druckfarbe von einem Druckerband auf ein Substrat zu übertragen, das längs eines vorgegebenen Weges benachbart dem Drucker transportiert wird, wobei der Bandantrieb als ein Druckerbandantriebsmechanismus für das Transportieren des Bandes zwischen der ersten und zweiten Bandspule wirkt, und wobei der Drucker außerdem einen Druckkopf aufweist, der angeordnet ist, um eine Seite des Bandes zu kontaktieren, um eine entgegengesetzte Seite des Bandes in Kontakt mit einem Substrat auf dem vorgegebenen Weg zu drücken.

14. Bandantrieb nach einem der Ansprüche 12 oder 13, bei dem der Drucker ein Thermotransferüberdrucker ist.

15. Verfahren zum Steuern eines Bandantriebes, der aufweist: einen ersten und zweiten Motor (12, 13), wobei der erste Motor ein drehmomentgesteuerter Motor ist; zwei Bandspulenhalterungen (1, 2), auf die die Bandspulen (3, 4) montiert werden können, wobei eine jede Spule durch einen jeweiligen Motor angetrieben werden kann; und einen Regler (14), der die Einschaltung der Motoren steuert, so dass das Band in einer ersten und zweiten Richtung (15, 16) zwischen den auf den Spulenhalterungen montierten Spulen transportiert werden kann, wobei eine jede Spulenhalterung mit einem jeweiligen Motor mittels einer Antriebskupplung verbunden ist, die mindestens ein konstantes Übersetzungsverhältnis liefert; und **dadurch gekennzeichnet, dass**, wenn das Band in der ersten Richtung bewegt wird, der drehmomentgesteuerte Motor in einer ersten Rotationsrichtung eingeschaltet wird, wenn das Band in der zweiten Richtung bewegt wird, der drehmomentgesteuerte Motor in der ersten Rotationsrichtung über einen Abschnitt der Bewegung und einer zweiten entgegengesetzten Rotationsrichtung über einen anderen Abschnitt der Bewegung eingeschaltet wird.

## Revendications

1. Dispositif d'entraînement de bande, comprenant des premier et deuxième moteurs (12, 13), le premier moteur étant un moteur à contrôle du couple, deux supports des bobines de bande (1, 2) sur lesquels les bobines de bande (3,4) peuvent être montées, chaque bobine pouvant être entraînée par un moteur respectif, et un moyen de commande (14), servant à contrôler l'actionnement des moteurs, de sorte que la bande peut être transportée dans des première et deuxième directions (15, 16) entre les bobines montées sur les supports des bobines , dans lequel :
chaque support de bobine est accouplé à un moteur respectif par l'intermédiaire d'un accouplement d'entraînement établissant au moins un rapport de transmission fixe ; et **caractérisé en ce que**
lors du déplacement de la bande dans ladite première direction, ledit moteur à contrôle du couple est actionné dans une première direction de rotation, et lors du déplacement de la bande dans ladite deuxième direction, ledit moteur à contrôle du couple est actionné dans ladite première direction de rotation pendant une partie dudit déplacement et dans une deuxième direction de rotation opposée pendant une autre partie dudit déplacement.

2. Dispositif d'entraînement de bande selon la revendication 1, dans lequel, lors du déplacement de la bande dans ladite première direction, ledit moteur à contrôle du couple est actionné dans ladite deuxième direction de rotation pendant une partie dudit déplacement.

3. Dispositif d'entraînement de bande selon les revendications 1 ou 2, dans lequel le deuxième moteur est un moteur pas-à-pas.

4. Dispositif d'entraînement de bande selon l'une quelconque des revendications précédentes, dans lequel ledit moyen de commande sert à déplacer ladite bande dans ladite première direction et à déplacer ensuite ladite bande dans ladite deuxième direction.

5. Dispositif d'entraînement de bande selon la revendication 4, dans lequel, lors du déplacement de la bande dans ladite première direction, ledit moteur à contrôle du couple est destiné à entraîner une bobine d'enroulement de la bande, et lors du déplacement de la bande dans ladite deuxième direction, ledit moteur à contrôle du couple est destiné à entraîner une bobine d'alimentation de la bande.

6. Dispositif d'entraînement de bande selon les revendications 4 ou 5, dans lequel, lors d'un changement de la direction de déplacement de la bande, ledit premier moteur est actionné dans ladite deuxième direction de rotation pendant une première période de temps et est ensuite actionné dans ladite première direction de rotation.

7. Dispositif d'entraînement de bande selon l'une quelconque des revendications précédentes, dans lequel ledit moteur à contrôle du couple est actionné dans la première direction en appliquant un courant dans une première direction du courant, et est actionné dans la deuxième direction opposée en appliquant un courant dans une deuxième direction opposée du courant.

8. Dispositif d'entraînement de bande selon l'une quelconque des revendications précédentes, dans lequel au moins un des premier et deuxième moteurs peut être contrôlé pour fonctionner comme un moteur à contrôle du couple ou comme un moteur à contrôle de la position.

9. Dispositif d'entraînement de bande selon l'une quelconque des revendications précédentes, dans lequel le moyen de commande est configuré de sorte à régler la tension de la bande en contrôlant le moteur à contrôle du couple.

10. Dispositif d'entraînement de bande selon l'une quelconque des revendications précédentes, dans lequel le moyen de commande est configuré de sorte à actionner le moteur à contrôle du couple en fournissant un courant au moins en partie basé sur un diamètre d'au moins une des bobines.

11. Dispositif d'entraînement de bande selon l'une quelconque des revendications 1 à 10, dans lequel chaque support de bobine comporte un premier axe de rotation respectif, chaque moteur comportant un arbre avec un deuxième axe de rotation respectif, les premier et deuxième axes respectifs étant coaxiaux.

12. Dispositif d'entraînement de bande selon l'une quelconque des revendications précédentes, incorporé dans une imprimante à transfert thermique.

13. Dispositif d'entraînement de bande selon la revendication 12, dans lequel l'imprimante est configurée de sorte à transférer l'encre d'un ruban d'impression vers un substrat, transporté le long d'une trajectoire prédéterminée adjacente à l'imprimante, le dispositif d'entraînement de la bande servant de mécanisme d'entraînement du ruban d'impression pour transporter le ruban entre des première et deuxième bobines de ruban, l'imprimante comprenant en outre une tête d'impression destinée à contacter un côté du ruban pour presser un côté opposé du ruban en contact avec un substrat sur la trajectoire prédéterminée.

14. Dispositif d'entraînement de bande selon l'une quelconque des revendications 12 ou 13, dans lequel l'imprimante est une imprimante de surimpression à transfert thermique.

15. Procédé de contrôle d'un dispositif d'entraînement de bande, comprenant des premier et deuxième moteurs (12, 13), le premier moteur étant un moteur à contrôle du couple, deux supports des bobines de bande (1,2), sur lesquels les bobines de bande (3, 4) peuvent être montées, chaque bobine pouvant être entraînée par un moteur respectif, et un moyen de commande (14), contrôlant l'actionnement des moteurs, de sorte que la bande peut être transportée dans des première et deuxième directions (15, 16) entre les bobines montées sur les supports des bobines, dans lequel chaque support de bobine est accouplé à un moteur respectif par l'intermédiaire d'un accouplement d'entraînement établissant au moins un rapport de transmission fixe, et **caractérisé en ce que**, lors du déplacement de la bande dans ladite première direction, ledit moteur à contrôle du couple et actionné dans une première direction de rotation, et lors du déplacement de la bande dans ladite deuxième direction, ledit moteur à contrôle du couple est actionné dans ladite première direction de rotation pendant une partie dudit déplacement et dans une deuxième direction de rotation opposée pendant une autre partie dudit déplacement.
